# EUROPÄISCHE PATENTSCHRIFT

(11) **EP 4 550 742 B1**
(45) Veröffentlichungstag und Bekanntmachung des Hinweises auf die Patenterteilung: **08.10.2025**
(21) Anmeldenummer: 23207167.0
(22) Anmeldetag: 31.10.2023
(51) Int. Cl.: H04L 41/0816, H04L 41/0853, H04L 43/0811, H04L 41/084, H04L 41/082, H04L 67/00, H04L 67/12, A47K 4/00

(54) **AUSTAUSCH EINER SANITÄREINRICHTUNG**
REPLACEMENT OF A SANITARY DEVICE
REMPLACEMENT D'UN DISPOSITIF SANITAIRE

(43) Veröffentlichungstag der Anmeldung: 07.05.2025
(73) Patentinhaber: Geberit International AG, 8645 Jona (CH)
(72) Erfinder: Portmann, Florian, 8708 Männedorf (CH); Oberholzer, Roland, 8610 Uster (CH); Raissle, Daniel, 8852 Altendorf (CH)
(74) Vertreter: Gulde & Partner

(56) Entgegenhaltungen:
- CN-A- 108 964 994
- CN-A- 114 205 227
- CN-A- 114 448 783
- US-A1- 2015 244 565

## Beschreibung

Die vorliegende Erfindung betrifft ein Verfahren zum Austausch einer Sanitäreinrichtung. Gegenstand der vorliegenden Erfindung ist ferner ein die Verfahrensschritte ausführendes Gateway.

Aus dem Stand der Technik sind Sanitäreinrichtungen wie Toiletten, Urinale, Waschtischarmaturen, Dusch- und Badewannenarmaturen, Hygienespülungen und dergleichen bekannt, welche eine erweiterte Funktionalität bieten und beispielsweise eine Konfiguration hinsichtlich zu verwendender Betriebsparameter erlauben. Zu diesem Zweck umfassen die vorgenannten Sanitäreinrichtungen elektronische Steuerungen, durch welche diese erweiterte Funktionalität realisiert wird.

Sofern ein Austausch einer Sanitäreinrichtung erforderlich ist, kann dies zugleich bedeuten, dass eine darin verbaute elektronische Steuerung ebenfalls mit ausgetauscht wird. Dies ist problematisch, da im Speicher der elektronischen Steuerung Werte für Betriebsparameter für die Sanitäreinrichtung abgelegt sind, welche auch nach einem Austausch der Sanitäreinrichtung durch ein bau- oder typengleiches Gerät zwecks Weiternutzung vorhanden sein müssen. Bisher kann eine solche Konfiguration einer ausgetauschten Sanitäreinrichtung, insbesondere ohne den Einsatz von Drittgeräten (wie z.B. das Smartphone eines Sanitärinstallateurs oder Servicetechnikers), nicht automatisch auf eine neue Sanitäreinrichtung übertragen werden.

Dies ist besonders nachteilig für den Fall eines eine Vielzahl von Sanitäreinrichtungen umfassenden vernetzten Systems, da ein den Austausch vornehmender Sanitärinstallateur oder Servicetechniker über einen Zugang zum System verfügen müsste, um eine Konfiguration auf die neue Sanitäreinrichtung, d.h. auf die elektronische Steuerung selbiger, übertragen zu können.

US 2015/244565 A1 offenbart ein Verfahren zur Konfiguration eines Netzwerks. CN 114 205 227 A betrifft eine Gerätesynchronisation für SmartHome-Geräte mittels UWB. CN 108 964 994 A betrifft ein Ersetzen von SmartHome-Geräten. CN 114 448 783 A betrifft ein Ersetzen von loT-Geräten.

Vor diesem Hintergrund liegt der vorliegenden Erfindung die Aufgabe zugrunde, eine Lösung bereitzustellen, welche es einem Sanitärinstallateur oder Servicetechniker ermöglicht, ohne spezifische IT-bezogene Fachkenntnisse, ohne Zugriffsrechte auf ein gegebenes System und ohne ein manuelles Einstellen einzelner Parameter eine bestehende Konfiguration für eine als Austauschgerät fungierende Sanitäreinrichtung weiterzuverwenden.

Erfindungsgemäß wird diese Aufgabe gelöst durch ein in den Ansprüchen definiertes Verfahren.

Der vorstehenden Lösung liegt die Erkenntnis zu Grunde, dass bei automatischer Speicherung der Konfigurationen aller an ein Gateway angeschlossenen Sanitäreinrichtungen seitens des Gateways bei einem Austausch einer Sanitäreinrichtung, welche eine entsprechende elektronische Steuerung umfasst, weder Zugriffsrechte auf ein solches System, in welches die Sanitäreinrichtung eingebunden ist, noch ein zusätzlicher, insbesondere manueller, Arbeitsschritt erforderlich sind. Die Anforderungen an das einen Austausch vornehmende Personal können dadurch drastisch reduziert werden, da keine Fachkenntnisse hinsichtlich einer Neukonfiguration einer als Reparaturersatz fungierenden Sanitäreinrichtung mehr erforderlich sind.

Erfindungsgemäß erfolgt das Erhalten und Abspeichern der Konfiguration der Sanitäreinrichtung, sofern die Sanitäreinrichtung erstmalig dem Gateway zugeordnet wurde. Auf diese Weise kann sichergestellt werden, dass bei initialem Einbinden einer Sanitäreinrichtung in ein bestehendes System unmittelbar eine Konfiguration selbiger vorliegt.

Vorzugsweise erfolgt das Erhalten und Abspeichern der Konfiguration der Sanitäreinrichtung, sofern wenigstens ein Parameter der Konfiguration der Sanitäreinrichtung modifiziert wurde. Dadurch bleibt gewährleistet, dass seitens des Gateways keine veralteten Informationen vorliegen, welche mitunter für ein Ersatzgerät verwendet werden würden.

In einer bevorzugten Ausgestaltung wurde der wenigstens eine Parameter seitens des Gateways modifiziert. Somit initiiert das Gateway selbst durch eine Konfigurationsänderung für die Sanitäreinrichtung, dass eine entsprechend aktualisierte Fassung der Konfiguration vorhanden ist.

Vorteilhafterweise wurde der wenigstens eine Parameter seitens einer kommunikativ mit der Sanitäreinrichtung verbundenen Nutzereinrichtung, insbesondere seitens einer Applikation derselben, modifiziert. In einem solchen Szenario erfolgt beispielsweise ein direkter Zugriff einer Nutzereinrichtung, z.B. mittels einer drahtlosen Verbindung (wie Bluetooth), auf die Sanitäreinrichtung. Damit Änderungen an der Konfiguration vom Gateway zwecks Speicherung erfasst werden, kann ferner vorgesehen sein, dass das Gateway in vordefinierten Intervallen die Konfiguration der Sanitäreinrichtung abruft und speichert.

Vorzugsweise ist eine Zuordnung zum Gateway gegeben, sofern der Sanitäreinrichtung, insbesondere im Rahmen einer initialen Enumeration, eine logische Adresse zugewiesen wurde. Da eine logische Adresse einer Sanitäreinrichtung stets seitens des Gateways zugewiesen wird, dient dies als Indikator dafür, dass bei vorhandener logischer Adresse einer Sanitäreinrichtung bereits eine Zuordnung erfolgte.

In einer bevorzugten Ausgestaltung umfasst das Verfahren ferner ein Aufspielen eines Firmware-Updates auf die zweite Sanitäreinrichtung und ein Veranlassen eines Neustarts der zweiten Sanitäreinrichtung vor dem Aufspielen der abgespeicherten Konfiguration auf die zweite Sanitäreinrichtung. Dies hat den Vorteil, dass bei einer mit einer veralteten Firmware ausgestatteten zweiten Sanitäreinrichtung, welche als Austauschgerät dient, vermieden werden kann, dass eine inkompatible Konfiguration der ausgetauschten Sanitäreinrichtung aufgespielt wird. Beispielsweise kann ein Firmware-Update bewirken, dass bestimmte Parameter einer Konfiguration nicht mehr vorhanden sind und/oder neue Parameter hinzugekommen sind.

Vorteilhafterweise ist als Sanitäreinrichtung ein WC, ein Dusch-WC, ein Urinal, eine Waschtischarmatur, eine Dusch- oder Badewannenarmatur, eine Geruchsabsaugung, eine Hygienespülung, eine elektronische Spülkastenbetätigung, eine Hygienespüleinheit, ein Temperatursensor, ein Drucksensor, ein Volumensensor, ein Spiegelschrank (welcher beispielsweise Funktionen in Bezug auf eine Ventilation, eine Heizung, eine Oberflächenheizung, und/oder eine Gesichts- bzw. Benutzerkennung aufweist), eine Beleuchtungseinreichung oder eine in einer der vorgenannten Einrichtungen umfasste elektronische Steuerung, vorgesehen. Insbesondere bei einer Anordnung einer Vielzahl gleichartiger Sanitäreinrichtungen (wie z.B. einer Vielzahl von Urinalen) erlaubt die erfindungsgemäße Lösung einen einfachen Austausch eines einzelnen Gerätes. Sofern es sich bei der Sanitäreinrichtung um einen der vorgenannten Sensoren handelt, kann auch vorgesehen sein, dass ein solcher Sensor direkt am Gateway angeschlossen ist, wodurch ein Identifizieren einer kommunikativen Trennung und ein Identifizieren eines Ersatzgerätes vereinfacht werden.

Vorzugsweise umfasst die Konfiguration a) produktspezifische Parameter, insbesondere Typ, physischer Ort der Sanitäreinrichtung, Position innerhalb einer Anordnung mit weiteren Sanitäreinrichtungen, zugewiesene logische Adresse, b) nutzungsspezifische Parameter, insbesondere Anzahl der Nutzungstage, Anzahl der Spülungen, Anzahl der Benutzungen, und/oder c) einstellungsspezifische Parameter, insbesondere Spülzeit, Nachlaufzeit, Intervallspülungsintervall, Intervallspülungsspülzeit, Schwallspülungsintervall, Schwallspülungsspülzeit, Reinigungszeit. Als einstellungsspezifischer Parameter kann beispielsweise auch die Farbe einer Beleuchtungseinreichung vorgesehen sein, falls eine Sanitäreinrichtung eine solche umfasst oder selbst eine solche darstellt.

Erfindungsgemäß ist zur kommunikativen Verbindung von Gateway und Sanitäreinrichtung ein Bussystem, insbesondere mittels Kommunikation via ElA-485 bzw. RS-485, vorgesehen. Die Verwendung eines Bussystems ist vorteilhaft, da auf diese Weise eine zuverlässige Kommunikation realisiert werden kann.

Vorteilhafterweise ist zur kommunikativen Verbindung von Gateway und Sanitäreinrichtung ein zwischengeschalteter Konverter vorgesehen. Mittels eines solchen Konverters wird es ermöglicht, dass Geräte über eine einfachere und somit kostengünstigere Kommunikationsschnittstelle verfügen können. Dennoch ist eine Kommunikation über das Bussystem möglich, da ein Konverter mit einer Vielzahl von Geräten, beispielsweise bis zu fünf Geräte, verbunden werden kann.

Vorzugsweise ist zur kommunikativen Verbindung von Konverter und Sanitäreinrichtung eine Inter Device Connection (IDC), insbesondere mittels Kommunikation via I²C, vorgesehen. Dies erlaubt einen vergleichsweise geringen Implementierungsaufwand auf Seiten einer Sanitäreinrichtung.

In einer bevorzugten Ausgestaltung umfasst das Verfahren ferner ein Ausgeben einer Benachrichtigung bei Feststellung, dass der Typ der Sanitäreinrichtung und der Typ der zweiten Sanitäreinrichtung nicht übereinstimmen. Beispielsweise kann das Gateway selbst auf einem Display eine solche Benachrichtigung anzeigen, eine akustische Benachrichtigung über einen Lautsprecher des Gateways ausgeben oder den Versand einer Nachricht, beispielsweise per E-Mail, an einen im Gateway hinterlegten Adressaten vollziehen. Alternativ oder zusätzlich kann vorgesehen sein, dass eine Benachrichtigung seitens einer Nutzereinrichtung ausgegeben bzw. angezeigt wird, insbesondere mittels einer Applikation derselben.

Des Weiteren wird die vorgenannte Aufgabe erfindungsgemäß gelöst durch ein in den Ansprüchen definiertes Gateway.

Gemäß einer alternativen, aber nicht beanspruchten, Ausführungsform kann vorgesehen sein, dass das Gateway und die zu ersetzende Sanitäreinrichtung ausschließlich mittels einer Funkverbindung (z.B. via Bluetooth) kommunikativ miteinander verbunden sind. In einem solchen Fall kann das erfindungsgemäße Verfahren teilautomatisiert vollzogen werden, indem nach einer Außerbetriebnahme der Sanitäreinrichtung eine zweite Sanitäreinrichtung herangezogen wird. Ein Sanitärinstallateur oder Servicetechniker betätigt anschließend eine am Gateway vorgesehene Taste, welche das Gateway in einen Pairing-Prozess versetzt, in welchem eine Verbindung mit neuen Geräten wie z.B. der zweiten Sanitäreinrichtung vorgenommen werden kann. Mittels einer auf einer Nutzereinrichtung, beispielsweise einem Smartphone, des Sanitärinstallateurs oder Servicetechnikers vorgesehenen Applikation wird sodann eine Verbindung von der Nutzereinrichtung zum Gateway aufgebaut. Ohne Angabe eines Kennwortes oder anderweitiger Informationen wird in der Applikation die zwischenzeitlich vom sich immer noch im Pairing-Modus befindenden Gateway erkannte zweite Sanitäreinrichtung angezeigt, welche nach Auswahl einer entsprechenden Funktion (z.B. "Endgeräte-Ersatz" oder "Reparaturersatz") den Sanitärinstallateur oder Servicetechniker dazu auffordert, sowohl von der ersetzten Sanitäreinrichtung als auch von der ersetzenden Sanitäreinrichtung eine Seriennummer einzugeben, welche beispielsweise physisch auf der jeweiligen Sanitäreinrichtung aufgebracht ist, beispielsweise in Form eines Aufklebers oder dergleichen. Unter Nutzung dieser Seriennummern vollzieht das Gateway letztlich ein Aufspielen der Konfiguration der Sanitäreinrichtung auf die zweite Sanitäreinrichtung.

Auf diese Weise kann ein Sanitärinstallateur oder Servicetechniker auch ohne umfangreiche IT-Kenntnisse den Austausch einer Sanitäreinrichtung vornehmen und auf die als Ersatz fungierende Sanitäreinrichtung eine Konfiguration aufspielen.

Weitere Einzelheiten, Merkmale und Vorteile der Erfindung werden anhand der nachfolgenden Ausführungsbeispiele näher erläutert.

Dabei zeigen:
- Fig. 1: in einer schematischen Übersicht ein System umfassend mehrere Sanitäreinrichtungen;
- Fig. 2: in einem Ablaufdiagramm ein Ausführungsbeispiel des erfindungsgemäßen Verfahrens;
- Fig. 3: in einem Ablaufdiagramm ein Ausführungsbeispiel für die optionale Ausführung eines Firmware-Updates im Rahmen des erfindungsgemäßen Verfahrens; und
- Fig. 4: in einem schematischen Blockdiagramm ein Ausführungsbeispiel für ein erfindungsgemäßes Gateway.

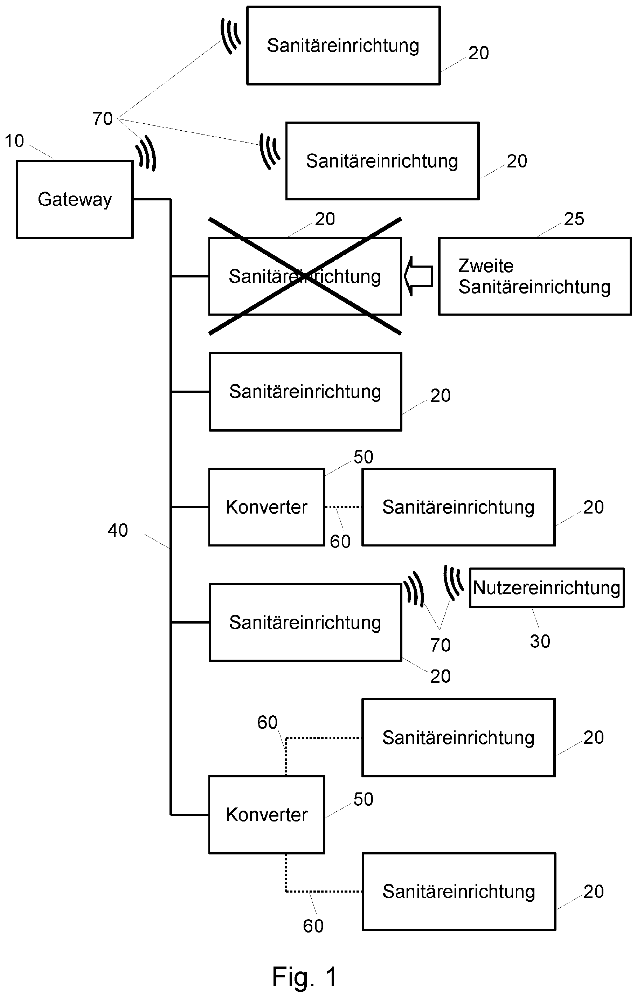

Fig. 1 zeigt in einer schematischen Übersicht ein System umfassend mehrere Sanitäreinrichtungen 20, welche mit einem Gateway 10 kommunikativ verbunden sind. Zur Verbindung ist vorliegend ein Bussystem 40 vorgesehen.

Die Sanitäreinrichtungen 20 sind entweder direkt über das Bussystem 40 mit dem Gateway 10 verbunden oder mittels eines Konverters 50. Ein Konverter 50 agiert selbst als Teilnehmer des Kommunikationsbusses, d.h. ist direkt an das Bussystem 40 angeschlossen, stellt jedoch zusätzlich eine kommunikative Verbindung zu einer oder mehreren Sanitäreinrichtungen 20 her, vorliegend mittels einer Inter Device Connection, beispielsweise per Inter-Integrated Circuit (I²C). Das Gateway 10 verfügt über dahingehende Informationen, welche Sanitäreinrichtungen 20 über welchen Konverter 50 erreichbar, d.h. an diesem angeschlossen, sind.

Des Weiteren ist in Fig. 1 erkennbar, dass Sanitäreinrichtungen 20 auch direkt mit dem Gateway 10 verbunden sein können, wozu eine drahtlose Verbindung 70, beispielsweise per Bluetooth, vorgesehen ist. Eine solche Anbindung der Sanitäreinrichtungen 20 bietet sich an, falls die örtlichen Gegebenheiten keine Nutzung einer Verbindung mittels eines Bussystems 40 zulassen.

Eine drahtlose Verbindung 70 kann nicht nur zwischen dem Gateway 10 und Sanitäreinrichtungen 20 vorgesehen sein, sondern auch zwischen einer Sanitäreinrichtung 20 und einer Nutzereinrichtung 30, welche beispielsweise das Smartphone eines Sanitärinstallateurs oder Servicetechnikers darstellt. Auf diese Weise erfolgt ein direkter Zugriff auf die Sanitäreinrichtung 20, beispielsweise zum Ändern oder zum Auslesen von Daten von selbiger.

In Fig. 1 ist schematisch dargestellt, dass eine Sanitäreinrichtung 20 nicht mehr mit dem Gateway 10 kommunikativ verbunden ist, was durch das entsprechend durchgestrichene Element illustriert ist. Dass eine zweite Sanitäreinrichtung 25, welche dem Gateway 10 noch nicht zugeordnet ist, als Reparaturersatz hierfür dienen soll, wird durch den daneben gezeigten Pfeil illustriert.

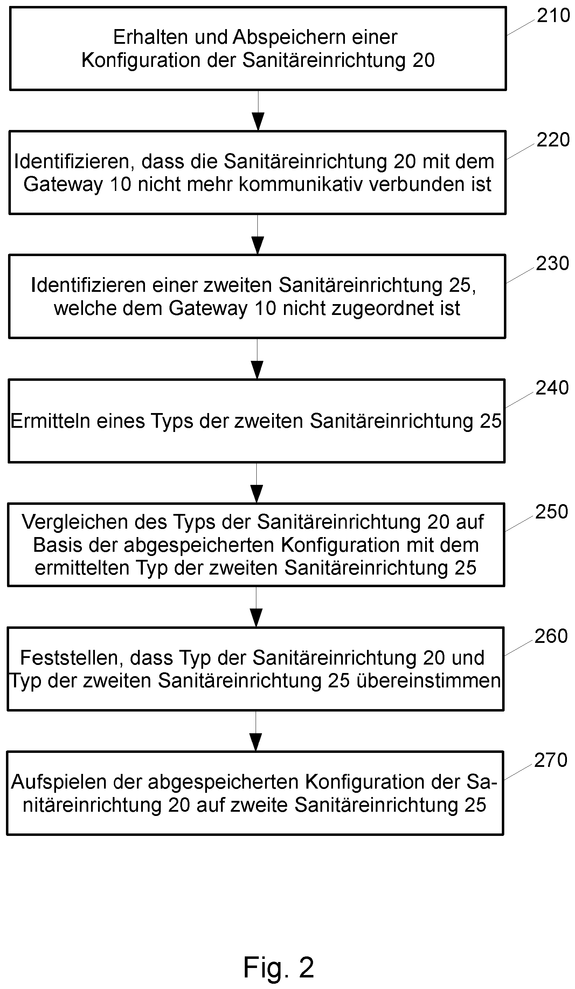

Fig. 2 zeigt in einem Ablaufdiagramm ein Ausführungsbeispiel des erfindungsgemäßen Verfahrens. Das Verfahren kann auf eine Kommunikationsstruktur gemäß Fig. 1 angewandt werden. Im Ausgangszustand ist eine Sanitäreinrichtung 20 einem Gateway 10 zugeordnet und kommunikativ mit diesem verbunden.

Gemäß Verfahrensschritt 210 erhält das Gateway 10 eine Konfiguration der Sanitäreinrichtung 20 und speichert diese ab. Dieser Verfahrensschritt erfolgt beispielsweise sofern die Sanitäreinrichtung 20 erstmalig dem Gateway 10 zugeordnet wurde oder sofern wenigstens ein Parameter der Konfiguration der Sanitäreinrichtung 20 modifiziert wurde.

Dabei kann der wenigstens eine Parameter seitens des Gateways 10 oder seitens einer mit der Sanitäreinrichtung 20 kommunikativ, insbesondere mittels drahtloser Verbindung 70, verbundenen Nutzereinrichtung 30 modifiziert worden sein. Des Weiteren kann auch vorgesehen sein, dass das Gateway 10 in vordefinierten Intervallen eine Konfiguration der Sanitäreinrichtung 20 erhält und abspeichert.

Anschließend erfolgt in Verfahrensschritt 220 ein Identifizieren, dass die Sanitäreinrichtung 20 mit dem Gateway 10 nicht mehr kommunikativ verbunden ist. Auslöser für das Ende einer kommunikativen Verbindung kann beispielsweise sein, dass die Sanitäreinrichtung 20 von der Stromversorgung getrennt wurde.

Im Anschluss wird gemäß Verfahrensschritt 230 eine zweite Sanitäreinrichtung 25 identifiziert, welche dem Gateway 10 nicht, d.h. noch nicht, zugeordnet ist. Hierzu wird seitens des Gateways 10 beispielsweise überprüft, ob kommunikativ Geräte erreichbar sind, welchen noch keine logische Adresse zugewiesen wurde. Das Zuweisen einer logischen Adresse für Sanitäreinrichtungen 20 kann z.B. im Rahmen einer initialen Enumeration erfolgen.

Im sich anschließenden Verfahrensschritt 240 ermittelt das Gateway 10 einen Typ der zweiten Sanitäreinrichtung 25, welche zuvor erkannt wurde. Der ermittelte Typ der zweiten Sanitäreinrichtung 25 wird in Verfahrensschritt 250 mit dem Typ der Sanitäreinrichtung 20 verglichen, welche nicht mehr kommunikativ mit dem Gateway 10 verbunden ist. Ein Vergleich ist möglich, da das Gateway 10 über die Konfiguration dieser Sanitäreinrichtung 20 verfügt, welche auch den Typ selbiger umfasst.

Nachdem in Verfahrensschritt 260 seitens des Gateways 10 festgestellt wird, dass der Typ der Sanitäreinrichtung 20 und der Typ der zweiten Sanitäreinrichtung 25 übereinstimmen, erfolgt in Verfahrensschritt 270 ein Aufspielen der abgespeicherten Konfiguration der Sanitäreinrichtung 20 auf die zweite Sanitäreinrichtung 25. Auf diese Weise wird beispielsweise die logische Adresse der ersetzten Sanitäreinrichtung 20 von der ersetzenden zweiten Sanitäreinrichtung 25 übernommen.

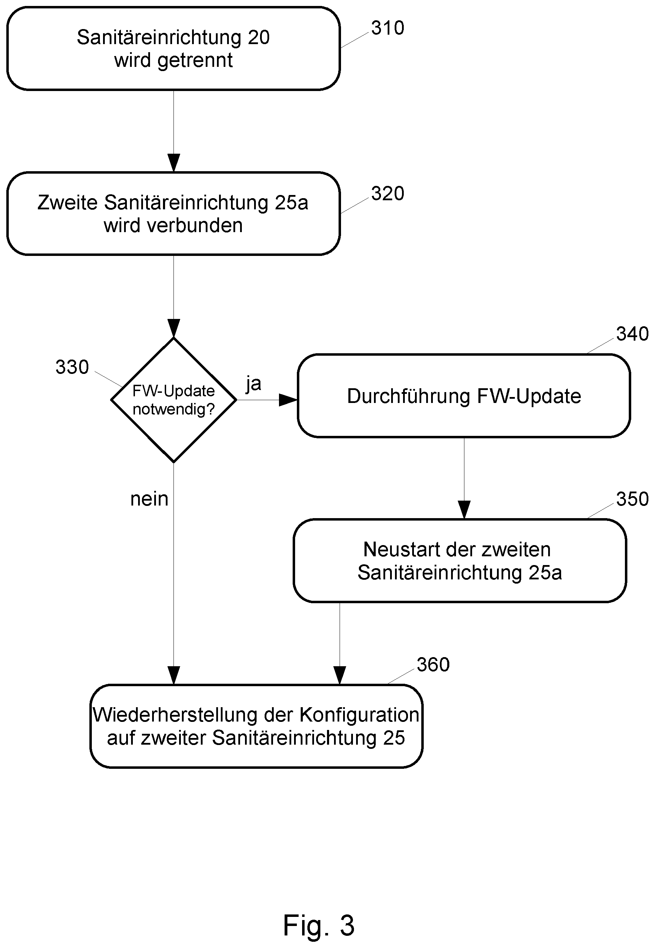

Fig. 3 zeigt in einem Ablaufdiagramm ein Ausführungsbeispiel für die optionale Ausführung eines Firmware-Updates im Rahmen des erfindungsgemäßen Verfahrens. In Verfahrensschritt 310 erfolgt zunächst ein Trennen der Sanitäreinrichtung 20 vom Gateway 10, d.h. die Sanitäreinrichtung 20 ist mit dem Gateway 10 nicht mehr kommunikativ verbunden.

Anschließend wird in Verfahrensschritt 320 die zweite Sanitäreinrichtung 25 mit dem Gateway 10 verbunden. Dies beinhaltet beispielsweise das Herstellen einer Stromversorgung für die zweite Sanitäreinrichtung 25 und ein Anschließen dieser per Verbindung via Bussystem 40.

Nachfolgend wird in Verfahrensschritt 330 seitens des Gateways 10 überprüft, ob für die zweite Sanitäreinrichtung 25 ein Firmware-Update durchzuführen ist. Hierzu vergleicht das Gateway 10 die Version der Firmware, welche zu diesem Zeitpunkt auf der zweiten Sanitäreinrichtung 25 vorliegt, mit der aktuellsten Version der Firmware, die dem Gateway 10 bekannt ist. Das Gateway 10 kann Informationen hinsichtlich der aktuellsten Version einer Firmware für verschiedenen Typen von Sanitäreinrichtungen beispielsweise eigenständig via Internet beziehen.

Falls ein Firmware-Update notwendig ist, wird dieses in Verfahrensschritt 340 durchgeführt, indem entsprechende Daten vom Gateway 10 an die zweite Sanitäreinrichtung 25 übermittelt werden und die zweite Sanitäreinrichtung 25 einen Befehl zur Verarbeitung dieser Daten erhält. Anschließend, d.h. nach Abschluss des Firmware-Updates, erfolgt in Verfahrensschritt 350 ein Neustart der zweiten Sanitäreinrichtung 25.

Nachdem die Firmware für die zweite Sanitäreinrichtung 25 auf den aktuellen Stand gebracht wurde, ist gemäß Verfahrensschritt 360 vorgesehen, dass das Gateway 10 die Wiederherstellung der Konfiguration auf der zweiten Sanitäreinrichtung 25 initiiert.

So kann vermieden werden, dass bei einer mit einer veralteten Firmware ausgestatteten zweiten Sanitäreinrichtung eine inkompatible Konfiguration der ausgetauschten Sanitäreinrichtung aufgespielt wird, welche beispielsweise aus entfernten und/oder neu hinzugekommenen Parametern resultiert.

Für den Fall hingegen, dass in Verfahrensschritt 330 seitens des Gateways 10 festgestellt wird, dass die auf der zweiten Sanitäreinrichtung 25 vorhandene Firmware-Version bereits derjenigen Version entspricht, welche vom Gateway 10 als aktuell erachtet wird, werden die Verfahrensschritte 340 und 350 nicht durchgeführt, sondern es erfolgt direkt die Wiederherstellung der Konfiguration auf der zweiten Sanitäreinrichtung 25 gemäß Verfahrensschritt 360.

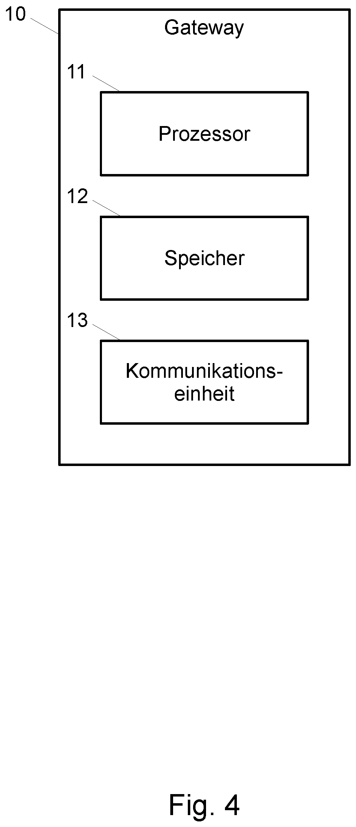

Fig. 4 zeigt in einem schematischen Blockdiagramm ein Ausführungsbeispiel für ein erfindungsgemäßes Gateway 10.

Das Gateway 10 verfügt über einen Prozessor 10, mit welchem Operationen des Gateways 10 gesteuert werden. Des Weiteren verfügt das Gateway 10 über einen oder mehrere Speicher 12, welche zum einen für die Speicherung eines Betriebssystems des Gateways 10 genutzt werden und zum anderen die Speicherung von Konfigurationen erlauben, welche von Sanitäreinrichtungen 20 erhalten wurden. Ferner sind im Gateway 10 eine oder mehrere Kommunikationseinheiten 13 vorgesehen. Zum einen ist darüber eine Verbindung via Bussystem 40 möglich und zum anderen kann darüber eine drahtlose Verbindung 70, insbesondere zu einzelnen Sanitäreinrichtungen 20, hergestellt werden.

Die vorstehend beschriebenen Figuren und die im Zusammenhang mit diesen erläuterten Ausführungsbeispiele dienen lediglich einer Erläuterung der Erfindung und sind für diese nicht beschränkend.

### Bezugszeichenliste:

- 10: Gateway
- 11: Prozessor des Gateways
- 12: Speicher des Gateways
- 13: Kommunikationseinheit des Gateways

- 20: Sanitäreinrichtung(en)
- 25: Zweite Sanitäreinrichtung (als Austausch)
- 30: Nutzereinrichtung
- 40: Verbindung via Bussystem
- 50: Konverter
- 60: Verbindung via Inter Device Connection
- 70: Drahtlose Verbindung

- 210 - 270: Verfahrensschritt
- 310 - 360: Verfahrensschritt

## Patentansprüche

1. Verfahren zum Austausch einer einem Gateway (10) zugeordneten und kommunikativ mit diesem verbundenen Sanitäreinrichtung (20), wobei das Gateway (10) an das Internet angebunden ist und zur kommunikativen Verbindung von dem Gateway (10) und der Sanitäreinrichtung (20) ein Bussystem (40) vorgesehen ist, umfassend die folgenden seitens des Gateways (10) ausgeführten Verfahrensschritte:
- Erhalten und Abspeichern (210) einer Konfiguration der Sanitäreinrichtung (20) sofern die Sanitäreinrichtung (20) erstmalig dem Gateway (10) zugeordnet wurde,
- Identifizieren (220), dass die Sanitäreinrichtung (20) mit dem Gateway (10) nicht mehr kommunikativ verbunden ist,
- Identifizieren (230) einer zweiten Sanitäreinrichtung (25), welche dem Gateway (10) nicht zugeordnet ist,
- Ermitteln (240) eines Typs der zweiten Sanitäreinrichtung (25),
- Vergleichen (250) des Typs der Sanitäreinrichtung (20) auf Basis der abgespeicherten Konfiguration mit dem ermittelten Typ der zweiten Sanitäreinrichtung (25),
- Feststellen (260), dass der Typ der Sanitäreinrichtung (20) und der Typ der zweiten Sanitäreinrichtung (25) übereinstimmen, und
- Aufspielen (270) der abgespeicherten Konfiguration der Sanitäreinrichtung (20) auf die zweite Sanitäreinrichtung (25).

2. Verfahren nach Anspruch 1, wobei das Erhalten und Abspeichern (210) der Konfiguration der Sanitäreinrichtung (20) erfolgt, sofern wenigstens ein Parameter der Konfiguration der Sanitäreinrichtung (20) modifiziert wurde.

3. Verfahren nach Anspruch 2, wobei der wenigstens eine Parameter seitens des Gateways (10) modifiziert wurde.

4. Verfahren nach Anspruch 2, wobei der wenigstens eine Parameter seitens einer kommunikativ, insbesondere mittels einer drahtlosen Verbindung (70), mit der Sanitäreinrichtung (20) verbundenen Nutzereinrichtung (30), insbesondere seitens einer Applikation derselben, modifiziert wurde.

5. Verfahren nach einem der Ansprüche 1 bis 4, wobei eine Zuordnung zum Gateway (10) gegeben ist, sofern der Sanitäreinrichtung (20), insbesondere im Rahmen einer initialen Enumeration, eine logische Adresse zugewiesen wurde.

6. Verfahren nach einem der Ansprüche 1 bis 5, ferner umfassend Aufspielen eines Firmware-Updates (340) auf die zweite Sanitäreinrichtung (25) und Veranlassen eines Neustarts (350) der zweiten Sanitäreinrichtung (25) vor dem Aufspielen (360) der abgespeicherten Konfiguration auf die zweite Sanitäreinrichtung (25).

7. Verfahren nach einem der Ansprüche 1 bis 6, wobei als Sanitäreinrichtung (20, 25) ein WC, ein Dusch-WC, ein Urinal, eine Waschtischarmatur, eine Dusch- oder Badewannenarmatur, eine Geruchsabsaugung, eine Hygienespülung, eine elektronische Spülkastenbetätigung, eine Hygienespüleinheit, ein Temperatursensor, ein Drucksensor, ein Volumensensor, ein Spiegelschrank, eine Beleuchtungseinrichtung oder eine in einer der vorgenannten Einrichtungen vorgesehene elektronische Steuerung vorgesehen sind.

8. Verfahren nach einem der Ansprüche 1 bis 7, wobei die Konfiguration
- produktspezifische Parameter, insbesondere Typ, physischer Ort der Sanitäreinrichtung (20), Position innerhalb einer Anordnung mit weiteren Sanitäreinrichtungen, zugewiesene logische Adresse,
- nutzungsspezifische Parameter, insbesondere Anzahl der Nutzungstage, Anzahl der Spülungen, Anzahl der Benutzungen, und/oder
- einstellungsspezifische Parameter, insbesondere Spülzeit, Nachlaufzeit, Intervallspülungsintervall, Intervallspülungsspülzeit, Schwallspülungsintervall, Schwallspülungsspülzeit, Reinigungszeit,
umfasst.

9. Verfahren nach einem der Ansprüche 1 bis 8, wobei eine Kommunikation via ElA-485 bzw. RS-485 vorgesehen ist.

10. Verfahren nach einem der Ansprüche 1 bis 9, wobei zur kommunikativen Verbindung von Gateway (10) und Sanitäreinrichtung (20, 25) ein zwischengeschalteter Konverter (50) vorgesehen ist.

11. Verfahren nach Anspruch 10, wobei zur kommunikativen Verbindung von Konverter (50) und Sanitäreinrichtung (20, 25) eine Inter Device Connection (60), insbesondere mittels Kommunikation via I²C, vorgesehen ist.

12. Verfahren nach einem der Ansprüche 1 bis 11, ferner umfassend: Ausgeben einer Benachrichtigung bei Feststellung, dass der Typ der Sanitäreinrichtung (20) und der Typ der zweiten Sanitäreinrichtung (25) nicht übereinstimmen.

13. Gateway (10) umfassend einen Prozessor (11), einen Speicher (12) und eine Kommunikationseinheit (13), wobei das Gateway (10) dazu eingerichtet ist,
- von einer Sanitäreinrichtung (20), welche dem Gateway (10) zugeordnet und kommunikativ mit diesem verbunden ist, eine Konfiguration zu erhalten (210) sofern die Sanitäreinrichtung (20) erstmalig dem Gateway (10) zugeordnet wurde, wobei das Gateway an das Internet angebunden ist und zur kommunikativen Verbindung von dem Gateway (10) und einer Sanitäreinrichtung (20) ein Bussystem (40) vorgesehen ist,,
- zu identifizieren (220), dass die Sanitäreinrichtung (20) mit dem Gateway (10) nicht mehr kommunikativ verbunden ist,
- eine zweite Sanitäreinrichtung (25) zu identifizieren (230), welche dem Gateway (10) nicht zugeordnet ist,
- einen Typ der zweiten Sanitäreinrichtung (25) zu ermitteln (240),
- den Typ der Sanitäreinrichtung (20) auf Basis der abgespeicherten Konfiguration mit dem ermittelten Typ der zweiten Sanitäreinrichtung (25) zu vergleichen (250),
- festzustellen (260), dass der Typ der Sanitäreinrichtung (20) und der Typ der zweiten Sanitäreinrichtung (25) übereinstimmen, und
- die abgespeicherte Konfiguration der Sanitäreinrichtung (20) auf die zweite Sanitäreinrichtung (25) aufzuspielen (270).

## Claims

1. A method for replacing a sanitary device (20) that is assigned to and communicatively connected to a gateway (10), wherein the gateway (10) is connected to the internet and a bus system (40) is provided for communicatively connecting the gateway (10) and the sanitary device (20), comprising the following method steps performed by the gateway (10):
- obtaining and storing (210) a configuration of the sanitary device (20) if the sanitary device (20) has been assigned to the gateway (10) for the first time,
- identifying (220) that the sanitary device (20) is no longer communicatively connected to the gateway (10),
- identifying (230) a second sanitary device (25) which is not assigned to the gateway (10),
- ascertaining (240) a type of the second sanitary device (25),
- comparing (250) the type of the sanitary device (20) with the ascertained type of the second sanitary device (25) on the basis of the stored configuration,
- determining (260) that the type of the sanitary device (20) and the type of the second sanitary device (25) match, and
- installing (270) the stored configuration of the sanitary device (20) on the second sanitary device (25).

2. The method according to Claim 1, wherein the configuration of the sanitary device (20) is obtained and stored (210) if at least one parameter of the configuration of the sanitary device (20) has been modified.

3. The method according to Claim 2, wherein the at least one parameter has been modified by the gateway (10).

4. The method according to Claim 2, wherein the at least one parameter has been modified by a user device (30) communicatively connected to the sanitary device (20), in particular by means of a wireless connection (70), in particular by an application thereof.

5. The method according to any one of Claims 1 to 4, wherein an assignment to the gateway (10) is provided if the sanitary device (20) has been assigned a logical address, in particular as part of an initial enumeration.

6. The method according to any one of Claims 1 to 5, further comprising installing a firmware update (340) on the second sanitary device (25) and prompting a restart (350) of the second sanitary device (25) before installing (360) the stored configuration on the second sanitary device (25).

7. The method according to any one of Claims 1 to 6, wherein a toilet, a washlet, a urinal, a washbasin tap, a shower or bath fitting, an odor extractor, a hygiene flush, an electronic cistern button, a hygiene flush unit, a temperature sensor, a pressure sensor, a volume sensor, a mirrored cabinet, a light device, or an electronic controller provided in one of the above-mentioned devices are provided as the sanitary device (20, 25).

8. The method according to any one of Claims 1 to 7, wherein the configuration comprises
- product-specific parameters, in particular the type, physical location of the sanitary device (20), position within an arrangement comprising further sanitary devices, assigned logical addresses,
- usage-specific parameters, in particular number of days of use, number of flushes, number of uses, and/or
- setting-specific parameters, in particular flush time, overrun time, intermittent flushing interval, intermittent flushing duration, surge flushing interval, surge flushing duration, and cleaning time.

9. The method according to any one of Claims 1 to 8, wherein communication via EIA-485 or RS-485 is provided.

10. The method according to any one of Claims 1 to 9, wherein an interposed converter (50) is provided for communicatively connecting the gateway (10) and the sanitary device (20, 25).

11. The method according to Claim 10, wherein an inter-device connection (60), in particular by means of communication via I²C, is provided for communicatively connecting the converter (50) and the sanitary device (20, 25).

12. The method according to any one of Claims 1 to 11, further comprising: outputting a notification when it is determined that the type of the sanitary device (20) and the type of the second sanitary device (25) do not match.

13. A gateway (10) comprising a processor (11), a memory (12), and a communication unit (13), wherein the gateway (10) is configured to
- obtain (210) a configuration from a sanitary device (20) that is assigned to and communicatively connected to the gateway (10) if the sanitary device (20) has been assigned to the gateway (10) for the first time, wherein the gateway is connected to the internet and a bus system (40) is provided for communicatively connecting the gateway (10) and a sanitary device (20),
- identify (220) that the sanitary device (20) is no longer communicatively connected to the gateway (10),
- identify (230) a second sanitary device (25) which is not assigned to the gateway (10),
- ascertain (240) a type of the second sanitary device (25),
- compare (250) the type of the sanitary device (20) with the ascertained type of the second sanitary device (25) on the basis of the stored configuration,
- determine (260) that the type of the sanitary device (20) and the type of the second sanitary device (25) match, and
- install (270) the stored configuration of the sanitary device (20) on the second sanitary device (25).

## Revendications

1. Procédé destiné à remplacer un dispositif sanitaire (20) associé à une passerelle (10) et connecté à celle-ci en communication, la passerelle (10) étant reliée à Internet et, pour connecter en communication la passerelle (10) et le dispositif sanitaire (20), il est prévu un système de bus (40), comprenant les étapes de procédé suivantes réalisées par le biais de la passerelle (10) :
- obtenir et enregistrer (210) une configuration du dispositif sanitaire (20) dans la mesure où le dispositif sanitaire (20) a été associé pour la première fois à la passerelle (10),
- identifier (220) que le dispositif sanitaire (20) n'est plus connecté en communication à la passerelle (10),
- identifier (230) un second dispositif sanitaire (25) qui n'est pas associé à la passerelle (10),
- déterminer (240) un type de second dispositif sanitaire (25),
- comparer (250) le type de dispositif sanitaire (20) sur la base de la configuration enregistrée avec le type déterminé du second dispositif sanitaire (25),
- constater (260) que le type de dispositif sanitaire (20) et le type de second dispositif sanitaire (25) correspondent, et
- charger (270) la configuration enregistrée du dispositif sanitaire (20) sur le second dispositif sanitaire (25).

2. Procédé selon la revendication 1, dans lequel l'obtention et l'enregistrement (210) de la configuration du dispositif sanitaire (20) sont effectués dans la mesure où au moins un paramètre de la configuration du dispositif sanitaire (20) a été modifié.

3. Procédé selon la revendication 2, dans lequel l'au moins un paramètre a été modifié par le biais de la passerelle (10).

4. Procédé selon la revendication 2, dans lequel l'au moins un paramètre a été modifié par le biais d'un moyen d'utilisateur (30) connecté au dispositif sanitaire (20) en communication, en particulier à l'aide d'une connexion sans fil (70), en particulier par le biais d'une application du moyen d'utilisateur.

5. Procédé selon l'une quelconque des revendications 1 à 4, dans lequel une association à la passerelle (10) est donnée dans la mesure où une adresse logique a été affectée au dispositif sanitaire (20), en particulier dans le cadre d'une énumération initiale.

6. Procédé selon l'une quelconque des revendications 1 à 5, comprenant en outre le chargement d'une mise à jour de micrologiciel (340) sur le second dispositif sanitaire (25) et le déclenchement d'un redémarrage (350) du second dispositif sanitaire (25) avant le chargement (360) de la configuration enregistrée sur le second dispositif sanitaire (25).

7. Procédé selon l'une quelconque des revendications 1 à 6, dans lequel en tant que dispositif sanitaire (20, 25) il est prévu un WC, un WC douche, un urinoir, une robinetterie de lavabo, une robinetterie de douche ou de baignoire, une extraction d'odeurs, une chasse d'eau hygiénique, un actionnement électronique de réservoir, une unité de chasse d'eau hygiénique, un capteur de température, un capteur de pression, un capteur de volume, une armoire de toilette, un moyen d'éclairage ou une commande électronique prévue dans l'un des moyens susmentionnés.

8. Procédé selon l'une quelconque des revendications 1 à 7, dans lequel la configuration comprend
- des paramètres spécifiques au produit, en particulier le type, l'emplacement physique du dispositif sanitaire (20), la position à l'intérieur d'un agencement avec d'autres dispositifs sanitaires, l'adresse logique attribuée,
- des paramètres spécifiques à l'utilisation, en particulier le nombre de jours d'utilisation, le nombre de chasses d'eau, le nombre d'utilisations et/ou
- des paramètres spécifiques au réglage, en particulier le temps de rinçage, le temps de fonctionnement, l'intervalle de rinçage par intervalles, le temps de rinçage par intervalles, l'intervalle de rinçage par à-coups, le temps de rinçage par à-coups, le temps de nettoyage.

9. Procédé selon l'une quelconque des revendications 1 à 8, dans lequel une communication par l'intermédiaire de EIA-485 respectivement RS-485 st prévue.

10. Procédé selon l'une quelconque des revendications 1 à 9, dans lequel pour connecter en communication la passerelle (10) et le dispositif sanitaire (20, 25) il est prévu un convertisseur intermédiaire (50).

11. Procédé selon la revendication 10, dans lequel pour connecter en communication le convertisseur (50) et le dispositif sanitaire (20, 25) il est prévu une connexion inter-dispositifs (60), en particulier à l'aide d'une communication par l'intermédiaire de I²C.

12. Procédé selon l'une quelconque des revendications 1 à 11, comprenant en outre : distribuer une information lors de la constatation que le type de dispositif sanitaire (20) et le type de second dispositif sanitaire (25) ne correspondent pas.

13. Passerelle (10) comprenant un processeur (11), une mémoire (12) et une unité de communication (13), dans laquelle la passerelle (10) est mise en place pour
- obtenir (210) une configuration, par un dispositif sanitaire (20) qui est associé à la passerelle (10) et connecté à celle-ci en communication, dans la mesure où le dispositif sanitaire (20) a été associé pour la première fois à la passerelle (10), la passerelle étant reliée à Internet et, pour connecter en communication la passerelle (10) et un dispositif sanitaire (20), il est prévu un système de bus (40),
- identifier (220) que le dispositif sanitaire (20) n'est plus connecté en communication à la passerelle (10),
- identifier (230) un second dispositif sanitaire (25) qui n'est pas associé à la passerelle (10),
- déterminer (240) un type de second dispositif sanitaire (25),
- comparer (250) le type du dispositif sanitaire (20) sur la base de la configuration enregistrée avec le type déterminé du second dispositif sanitaire (25),
- constater (260) que le type du dispositif sanitaire (20) et le type du second dispositif sanitaire (25) correspondent, et
- charger (270) la configuration enregistrée du dispositif sanitaire (20) sur le second dispositif sanitaire (25).
